(19) Europäisches Patentamt / European Patent Office / Office européen des brevets

(11) **EP 4 093 808 B1**

(12) **EUROPÄISCHE PATENTSCHRIFT**


(45) Veröffentlichungstag und Bekanntmachung des Hinweises auf die Patenterteilung:
**20.08.2025 Patentblatt 2025/34**

(21) Anmeldenummer: **21702864.6**

(22) Anmeldetag: **19.01.2021**

(51) Internationale Patentklassifikation (IPC):
***C08G 79/04*** $^{(2006.01)}$ ***C08L 85/02*** $^{(2006.01)}$
***C09K 15/32*** $^{(2006.01)}$ ***C09K 21/14*** $^{(2006.01)}$
***C10M 153/04*** $^{(2006.01)}$ ***C10N 30/06*** $^{(2006.01)}$
***C10N 30/08*** $^{(2006.01)}$ ***C10N 40/25*** $^{(2006.01)}$
***C10N 40/08*** $^{(2006.01)}$ ***C10N 40/20*** $^{(2006.01)}$

(52) Gemeinsame Patentklassifikation (CPC):
(C-Sets verfügbar)
**C10M 153/04; C08G 79/04; C08L 85/02; C09K 15/32; C09K 21/14;** C08L 2201/08; C08L 2203/40; C10M 2225/04; C10N 2030/06; C10N 2030/08; C10N 2040/08; C10N 2040/20; C10N 2040/25 (Forts.)

(86) Internationale Anmeldenummer:
**PCT/EP2021/051026**

(87) Internationale Veröffentlichungsnummer:
**WO 2021/148385 (29.07.2021 Gazette 2021/30)**


(54) **POLYMERE AW-VERBINDUNGEN**

POLYMER AW COMPOUNDS

COMPOSÉS ANTI-USURE POLYMÈRES


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2020 DE 102020000344**

(43) Veröffentlichungstag der Anmeldung:
**30.11.2022 Patentblatt 2022/48**



(73) Patentinhaber:
- **Metall-Chemie Technologies GmbH 20459 Hamburg (DE)**
- **Universität Hamburg 20148 Hamburg (DE)**

(72) Erfinder:
- **KIPPHARDT, Helmut 22359 Hamburg (DE)**
- **LUINSTRA, Gerrit A. 20146 Hamburg (DE)**
- **BEERMANN, Tim 20146 Hamburg (DE)**

(74) Vertreter: **Hamm&Wittkopp Patentanwälte PartmbB**
**Jungfernstieg 38**
**20354 Hamburg (DE)**



(56) Entgegenhaltungen:
**EP-A2- 0 849 282**

- **TAJTI ÁDÁM ET AL: "Microwave-assisted alcoholysis of dialkyl H -phosphonates by diols and amino alcohols", PHOSPHORUS, SULFUR, AND SILICON AND THE RELATED ELEMENTS, vol. 192, no. 6, 3 June 2017 (2017-06-03), pages 769 - 775, XP055798403, ISSN: 1042-6507, Retrieved from the Internet <URL:https://www.tandfonline.com/doi/pdf/10.1080/10426507.2017.1284841?needAccess=true> DOI: 10.1080/10426507.2017.1284841**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **BEZDUSHNA ELLA ET AL: "Microwave-Assisted Single-Step Synthesis of Poly(alkylene hydrogen phosphonate)s by Transesterification of Dimethyl Hydrogen Phosphonate with Poly(ethylene glycol)", MACROMOLECULAR RAPID COMMUNICATIONS, vol. 26, no. 6, 18 March 2005 (2005-03-18), DE, pages 471 - 476, XP055798687, ISSN: 1022-1336, DOI: 10.1002/ marc.200400494**

(52) Gemeinsame Patentklassifikation (CPC): (Forts.)

C-Sets
**C08L 85/02, C08L 91/00**

## Beschreibung

### Hintergrund der Erfindung

Moderne Schmierfluide verfügen über umfangreiche Additivpakete um die geforderten hohen Anforderungen zu gewährleisten. Besonders Verschleißschutzadditive (*anti wear* oder AW-Additive) sind unverzichtbare Komponenten in solchen Additivpaketen, um die aus Reibung und Verschleiß resultierenden Energie- und Monetärverluste zu reduzieren.

US 2017/0002253 beschreibt organische Phosphate und organische Phosphite (Abb. 1) als Reibungsverminderer sowie als geeignete Verschleißschutzadditive.

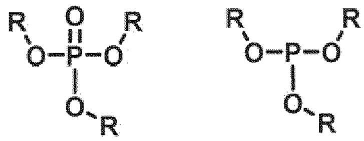

**Abb. 1:** Organische Phosphate (links) sowie organische Phosphite (rechts) als AW Additive.

Organische Phosphate mit monomere Resten (R) sind allerdings für ihr gesundheitsschädliches Potential bekannt, welches sich unter anderem in ihrer KMR-Einstufung (kanzerogen, mutagen, reproduktionstoxisch) widerspiegelt. Die Anwendung von KMR-Substanzen in industriellem Maßstab ist nach heutigem Stand absolut unerwünscht und wird in der Praxis nahezu vollständig vermieden. Zudem sind organische Phosphite durch den dreiwertigen Phosphor empfindlich gegenüber Oxidation, was in thermisch beanspruchten Systemen nachteilig ist.

Eine ebenfalls weit verbreitete Additivklasse stellt die Gruppe der ZinkDialkyldithiophosphate (ZDDP Derivate, siehe Abb. 2) dar.

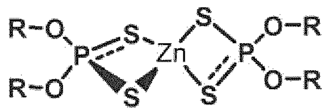

**Abb. 2:** Allgemeine Struktur von Zink Dialkyldithiophosphaten.

Es wird angenommen, dass ZDDP Derivate schützende Schichten ausbilden, welche verschleißmindernd wirken und damit die Energie- und Treibstoffeffizienz erhöhen. Nachteilig an diesen Additiven ist allerdings der sehr unangenehme Geruch sowie die Aschebildung. Dies kann sich aufgrund von Partikelbildung und der daraus resultierenden Deaktivierung der Katalysatoroberflächen negativ auf die Leistungsfähigkeit von Abgassystemkatalysatoren auswirken.

Weitere aschefreie Standardadditive für den Verschleißschutz sind die von Dithiophosphaten ausgehenden Derivate, die durch eine Reaktion von Dialkyldithiophosphaten sowie Alkyl- und Aryldithiophosphaten mit Acrylaten zu erhalten sind. Ein Beispiel für solche Verbindungen ist das Additionsprodukt von Dialkyldithiophosphaten an Ethylacrylat (siehe Abb. 3).

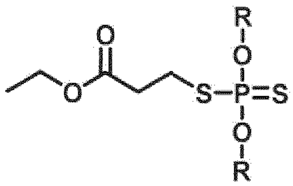

**Abb. 3:** Allgemeine Struktur von aschefreien Dithiophosphatderivaten.

Diese aschefreien Dithiophosphat-Derivate haben ebenfalls einen extrem unangenehmen Geruch und sind hinsichtlich ihrer Gefahrstoffeinstufung bedenklich.

Den Phosphaten analog werden auch Thiophosphate häufig als Verschleißschutzadditive verwendet. Insbesondere Arylthiophosphate, wie etwa TPPT (Triphenylthiophosphat), werden aber aufgrund von gesundheitlichen Bedenken und einer KMR-Einstufung kritisch hinterfragt.

Während Dioleylphosphonat (siehe Abb. 4, rechts) bereits seit langem als Antiverschleißzusatz (Anti-Wear, AW-Additiv) Anwendung findet, werden in WO 2019/155739 organische Phosphonsäurederivate mit kovalenter Phosphor-Kohlenstoffbindung (siehe Abb. 4 links) als wirkungsvolle Verschleißschutzadditive beschrieben.

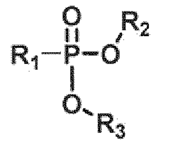

mit $R_1$ = Lauryl, $R_2$ = Me, Et, OH,
$R_3$ = Me, Et

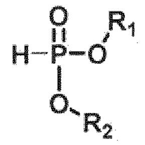

mit $R_1$ = $R_2$ = Oleyl

**Abb. 4:** Strukturen von WO 2019/155739 beschriebenen Phosphonsäurederivate (links) und des Dioleylphosphonats (rechts).

Somit besteht Bedarf an neuen und hochwirksamen - insbesondere aschefreien Verschleißschutzadditiven, die nicht gesundheits- oder umweltgefährdend sind, die hinsichtlich ihrer Gefahrstoffeinstufung unbedenklich sind und die sowohl ökologisch als auch ökonomisch breite Anwendung finden können. Dabei sind sowohl Anwendungen im Niederdruck- als auch im Hochdruckbereich *(extreme pressure)* von großem technischem Interesse.

Überraschenderweise konnten diese Herausforderungen durch die Reaktionsprodukte aus großtechnisch verfügbaren Dialkylphosphonaten (mit kurzkettigen Alkylresten), wie etwa Dimethylphosphonat, mit hydroxyl-terminiertem Polybutadien oder den entsprechenden hydrierten oder epoxidierten Derivaten von hydroxyl-terminierten Polybutadienen in einem einfachen Verfahren gelöst werden. Die Umsetzung erfolgt quantitativ mit hohen Ausbeuten und liefert ein Poly(polybutadienphosphonat) bzw. ein aus einem hydrierten oder epoxidierten Polybutadien hervorgehendes Derivat davon der Struktur I; die aus Polybutadien hervorgehenden Produkte sowie die aus hydrierten oder epoxidierten Polybutadien hervorgehenden Produkte werden im Folgenden auch als "Poly(polybutadienphosphonate)" bezeichnet. Überraschenderweise zeigen die so erhältlichen Produkte herausragende verschleißmindernde Eigenschaften - sowohl im Niederdruck- als auch im Hochdruckbereich - bei einer gleichzeitig unproblematischen Gefahrstoffeinstufung.

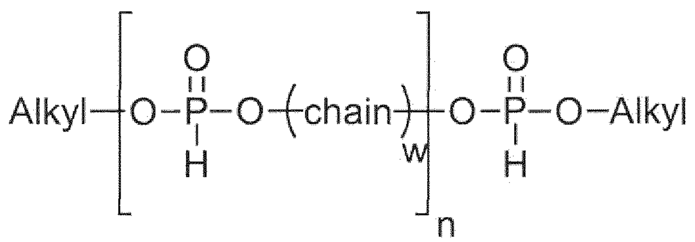

(I)

mit chain = $C_4H_6$, $C_4H_8$ oder $C_4H_6O$, w = 5-100 sowie n = 4-500; wenn chain = $C_4H_6$ handelt es sich dabei um lineare und verzweigte Anteile von Butylen, wenn chain = $C_4H_8$ oder $C_4H_6O$ handelt es sich dabei um die entsprechenden gesättigten bzw. epoxidierten Funktionen

Bei den in der Struktur der Formal (I) als "chain" bezeichneten Gruppen handelt es sich um lineare sowie um verzweigte Anteile von Butylen ($C_4H_6$) bzw. um die entsprechenden hydrierten ($C_4H_8$) oder epoxidierten ($C_4H_6O$) Gruppen. Im Fall von chain = $C_4H_6$ sind die verzweigten Anteile 1,2-vinylische Seitenketten und die linearen Anteile E und Z 1,4-Isomere von $C_4H_6$; wenn chain = $C_4H_8$ oder $C_4H_6O$ handelt es sich um die entsprechenden hydrierten oder epoxidierten Gruppen. Die Anteile der Vinylsubstitution (bzw. der entsprechenden gesättigten oder oxidierten Komponenten) liegen z.B. zwischen 5 und 80 wt% und die Anteile der linearen Komponenten können bei 20 bis 95 wt% liegen.

Der Parameter w in der Struktur der Formal (I) bestimmt sich aus dem Polymerisationsgrad des bei der Herstellung des Produkts der Formel (I) eingesetzten hydroxylterminierten Polybutadiens (bei chain = $C_4H_6$); bei chain = $C_4H_8$ oder $C_4H_6O$ aus dem Polymerisationsgrad des bei der Herstellung der Verbindung der Formal (I) eingesetzten hydroxylterminierten sowie hydrierten bzw. epoxidierten Polymers. Der Parameter w kann somit -je nach Ausgangsmaterial - im Bereich von 5-100 liegen. Bei bevorzugten Produkten liegt w im Bereich von 15-60 und bei ganz besonders bevorzugten Produkten ist w = 20-50.

Der Parameter n in der Struktur der Formal (I) bestimmt sich aus dem Polymerisationsgrad bei der eigentlichen Synthese der Poly(polybutadienphosphonate) (chain = $C_4H_6$) bzw. der entsprechenden hydrierten (chain = $C_4H_8$) oder epoxidierten (chain = $C_4H_6O$) Produkte und lässt sich durch das Stoffmengenverhältnis der Edukte, des hydroxylterminierten Polybutadiens (bzw. des hydrierten oder epoxidierten Derivats) und des kurzkettigen Dialkylphosphonats, einstellen. In den erfindungsgemäßen Produkten der Formal (I) lässt sich der Parameter n mittels $^{31}P$ NMR Spektroskopie und der damit möglichen Unterscheidung zwischen terminalen und in der Polymerkette befindlichen Phosphoratomen bestimmen. Erfindungsgemäß kann der Parameter n in einem Bereich von 4 bis 500 liegen. Bei bevorzugten Produkten liegt n im Bereich 8-200 und bei ganz besonders bevorzugten Produkten der Formel (I) ist n = 9-180.

Die erfindungsgemäßen Produkte der Formel I zeichnen sich einerseits durch einen überragenden Verschleißschutz in Niederdruckanwendungen aus und können dabei als hochwirksame Schmiermittel oder als Schmiermittelzusätze (Verschleißschutzadditive) in entsprechenden Mischungen zum Einsatz kommen. Darüber hinaus zeigen die erfindungsgemäßen Produkte der Formel I aber auch bei Hochdruckanwendungen Wirkung, und sie weisen herausragende Eigenschaften von *extrem pressure*-Zusätzen (von *EP*-Additiven) auf. Das erfindungsgemäße Poly(polybutadienphosphonat) der Formel I und die hydrierten oder epoxidierten Produkte der Formel (I) eignen sich insbesondere für die Formulierung von ölbasierten Zusammensetzungen, die als Schmiermittel, Hydraulikflüssigkeit, Motoröl, Schmierfett, Kühlschmierstoff, Schleifflüssigkeit, Metallverarbeitungsflüssigkeit oder Flammschutzmittel erfolgreiche Anwendung finden können.

Das erfindungsgemäße Poly(polybutadienphosphonat) der Formel I sowie die hydrierten oder epoxidierten Produkte der Formel (I) können durch eine Umesterungsreaktion eines kurzkettigen Dialkylphosphonats (etwa mit Alkyl = Methyl, Ethyl oder Propyl) mit einem mit hydroxyl-terminierten Polybutadien (wobei als Produkt ein Poly(polybutadienphosphonat) der Formel I mit chain = $C_4H_6$ erhalten wird), einem hydrierten hydroxyl-terminierten Polybutadien (wobei als Produkt ein Poly(polybutadienphosphonat) der Formel I mit chain = $C_4H_8$ erhalten wird) bzw. einem epoxidierten hydroxyl-terminierten Polybutadien (wobei als Produkt ein Poly(polybutadienphosphonat) der Formel I mit chain = $C_4H_6O$ erhalten wird) bei einer Temperatur zwischen etwa 140 °C und der Siedetemperatur des Dialkylphosphonats erhalten werden.

Das in der Synthese der erfindungsgemäßen Produkte der Formel (I) verwendete hydroxyl-terminierte Polybutadien bzw. die entsprechenden hydrierten oder epoxidierten Derivate davon können eine mittlere Molekularmasse, $M_n$, z. B. im Bereich von 500 bis 10.000 g/mol - etwa bei 2.100 g/mol - aufweisen, und die relative Anzahl von Hydroxyl-Funktionen, Fn(OH), kann im Bereich von 1,6 bis 4,0, bevorzugt in einem Bereich von 1,8 bis 2,5, ganz besonders bevorzugt in einem Bereich von 1,9 bis 2,0 liegen. Beispiele möglicher kommerziell erhältlicher hydroxylterminierter Polybutadiene sind die von Cray Valley unter der Bezeichnung Krasol® und Poly bd® sowie die von Evonik unter der Bezeichung Polyvest® HT vermarkteten Produkte; so etwa Krasol® LBH-P 2000 (mit $M_n$ = 2.000 g/mol, Fn(OH) = 1,9 bis 2,0 und PDI = 1,35), Krasol® LBH 2000 (mit $M_n$ = 2.100 g/mol, Fn(OH) = 1,9 bis 2,0 und PDI = 1,35), Krasol® LBH-P 3000 (mit $M_n$ = 3.200 g/mol, Fn(OH) = 1,9 bis 2,0 und PDI = 1,35), Krasol® LBH 3000 (mit $M_n$ = 3.000 g/mol, Fn(OH) = 1,9 bis 2,0 und PDI = 1,35), Poly bd® R-20LM (mit $M_n$= 1.200 g/mol, Fn(OH) = 1,8 und PDI = 2.0) oder Polyvest® HT (mit $M_n$ = ungefähr 2.900 g/mol und Fn(OH) = 2,4). Für die Herstellung der erfindungsgemäßen Produkte der Formel (I, mit chain $C_4H_6$ oder $C_4H_8$) sind ganz entsprechend hydrierte hydroxyl-terminierte bzw. epoxidierte hydroxyl-terminierte Polybutadiene zu verwenden; hydrierte hydroxyl-terminierte Polybutadiene sind z.B. unter der Bezeichnung Krasol® HLBH (z.B. Krasol® HLBH-P 2000 oder Krasol® HLBH-P 3000) und epoxidierte hydroxyl-terminierte Polybutadiene sind etwa unter der Bezeichnung Poly bd® 605E erhältlich.

Zur Synthese der erfindungsgemäßen Poly(polybutadienphosphonate) wird das hydroxyl-terminierte Polybutadien bzw. das entsprechende hydrierte oder epoxidierte Derivat davon mit zumindest so viel eines kurzkettigen Dialkylphosphonats umgesetzt, dass die hydroxyl-Funktionen des hydroxyl-terminierten Ausgangspolymers in der Reaktion wenigstens annähernd vollständig verestert werden kann. Bei einer relativen Anzahl von Hydroxyl-Funktionen, Fn(OH), von 2,0 wird erfindungsgemäß somit für jedes mol des hydroxyl-terminierten Polymers wenigstens ein mol-Äquivalent des kurzkettigen Dialkylphosphonats eingesetzt. Bevorzugt wird ein Überschuss des kurzkettigen Dialkylphosphonats verwendet; so können Stoffmengenverhältnisse (mol-Verhältnisse; hydroxyl-terminiertes Polymer : Dialkylphosphonat) von 0,4 bis 1, bevorzugt von 0,5 bis 0,7, ganz besonders bevorzugt von 0,6 verwendet werden.

Zur Herstellung der erfindungsgemäßen Produkte der Formel (I) wird ein hydroxyl-terminiertes Polybutadien oder ein hydriertes oder epoxidiertes Derivat davon eingesetzt, und dessen Mischung mit einem kurzkettigen Dialkylphosphonat in einen mit einer Destillationsapparatur ausgestatteten Reaktor gegeben. Unter Rühren kann die Anlage für 5 min mit Argon gespült werden. Anschließend wird der Reaktor unter Argon auf 'z.B. 150°C geheizt und für 2 h das entstandene Methanol abdestilliert. Nach 2h Reaktionszeit wird für weitere 2 h Vakuum angelegt, so dass Methanol sowie nicht reagiertes Dialkylphosphonat vollständig entfernt werden. Das Produkt wird als leicht opake viskose Masse erhalten. Zur Ermittlung der Menge an einzusetzenden Ausgangssubstanzen und der so erhaltenen und ggf. zu analysierenden Produkte wird bei polymeren Spezies die zahlenmittlere Molekularmasse, $M_n$, mittels NMR bestimmt. Diese zahlenmittlere Molekularmasse wurde in allen Berechnungen verwendet. Die terminalen und die brückenden Phosphoratome sind im $^{31}P$ NMR unterscheidbar, so dass darüber das mittlere n (Formel I) bestimmt werden kann.

Die erfindungsgemäßen Produkte der Formel I zeichnen sich durch eine hervorragende verschleißmindernde (AW-Wirkung) aus, und aufgrund ihrer in diesem und anderen Punkten überragenden Eigenschaften sowie aufgrund der Verwendbarkeit von großtechnisch verfügbarem Dialylphosphonat (insbesondere Dimethylphosphonat) und hydroxyl-terminierten Polybutadienen (bzw. hydrierten oder epoxidierten Derivaten davon) - bei gleichzeitig sehr leichter Herstellung - zeigen die erfindungsgemäßen Produkte ein extrem großes Potential für die Verwendung als Verschleißschutzadditive.

Des Weiteren ist das sich erfindungsgemäße Polymer der Formel (I) geruchsneutral, und es weist bemerkenswert hohe Löslichkeiten in aliphatischen Mineralölen sowie in synthetischen Esterölen auf. Zudem zeigen die erfindungsgemäßen Produkte der Formel I Eigenschaften von *extreme* pressure-Additiven, und sie weisen antioxidative Eigenschaften auf. Die erfindungsgemäßen Produkte der Formel I sind damit sowohl aus technischen als auch als ökonomischen und ökologischen Gründen für die Verwendung in ölbasierten Zusammensetzungen, die als Schmiermittel, Hydraulikflüssigkeit, Motoröl, Schmierfett, Kühlschmierstoff, Schleifflüssigkeit, Metallverarbeitungsflüssigkeit oder als Flammschutzmittel Verwendung finden können, herausragend geeignet.

**VKA Test:**

Für ein typisches Experiment wurden 20 mmol/Kg und 40 mmol/kg des gewünschten Produktes in 50 g eines aliphatischen Basisöles gelöst; wie ausgeführt erfolgt die Bestimmung der mittleren Molekularmasse mittels NMR.

Der Kugeltopf des Vierkugelapparates wurde mit 3 gereinigten Stahlkugeln aus 100Cr6 der Güteklasse G10 befüllt und diese fest eingespannt. Die eingespannten Kugeln wurden mit ca. 12 mL Öl umgeben, sodass die Kugeln ganzheitlich mit Öl bedeckt waren. Die Temperatur des Kugeltopfes wurde mit Hilfe einer Kühlflüssigkeit konstant bei 25 °C gehalten. Eine vierte Kugel wurde in einer angetriebenen Spindel befestigt. Der Kugeltopf wurde in die Haltevorrichtung gespannt und das System mit 150 N Kraft beansprucht. Der Testlauf wurde 60 min bei 1.450 U/min durchgeführt. Nach Beendigung des Testes wurde das System entlastet, die Kugel gereinigt und die Verschleißwunde mit Hilfe eines Lasermikroskopes vermessen. Es wurden in jedem Fall Doppelbestimmungen durchgeführt.

Das verwendete Basisöl ist ein technisches Basisöl mit hohem Anteil aliphatischer paraffinischer Kohlenwasserstoffe, welches sehr unpolar ist. Das Basisöl zeichnet sich weiterhin durch eine Viskosität (bei 40°C) von 84 $mm^2/s$,

Entsprechend der Testgeometrie, welche durch die Positionierung der Kugeln bestimmt ist, bildet sich eine kugelförmige Verschleißwunde auf den Standkugeln. Das Volumen von Kugeln kann durch folgende Formel berechnet werden: $V = \frac{4}{3} \pi r^3$ . Basierend auf der 3. Potenz des Radius ist eine Verschleißminderung von 328,33 µm (TPPT) bzw. 277,03 µm (L63) verglichen mit 240,65 µm des 100 mol% Oleylderivates und 235,33 µm der beschriebenen Mischung bei einer Konzentration von 1 mmol signifikant. Diese Testergebnisse sind in Tabelle 1 zusammengefasst.

Alternative ölbasierte Zusammensetzungen der erfindungsgemäße Poly(Polybutadien-phosphonate) - unabhängig davon, ob diese aus Polybutadien, aus einem hydrierten Polybutadien oder einem epoxydierten Polybutadien hervorgegangen sind - können als zusätzliche Komponenten z.B. EP Additive (insbesondere schwefelhaltige Produkte wie etwa 2,5-Dimercapto-1,3,4-thiadiazol, DMTD, oder dessen Dimer, Bis-DMTD), weitere AW Additive und/oder Additive zur Verbesserung des Anti-Crack Verhaltens (etwa phenolische Antioxidantien) enthalten.

**Tab. 1:** Ergebnisse des VKA Tests (in µm) mit verschiedenen AW-Additiven bei unterschiedlichen Konzentrationen

| Konz. des Additives | TPPT | L63 | 100 mol% Oleylalk. | Poly (polybutadienphosphonat) gemäß Beispiel 2 |
|---|---|---|---|---|
| 1 mmol | 328,33±29,31 | 277,03±14,65 | 240,65±8,32 | 232,03±9,59 |
| 2 mmol | 283,23±12,99 | 261,02±13,55 | 245,35±11,09 | 236,17±6,19 |
| Testbedingungen: 150 N, 60 min 1.450 U/min, 25 °C | | | | |

Das erfindungsgemäße Poly(Polybutadienphosphonat) der Formel I, wie es z.B. durch das Verfahren gemäß Beispiel 1 zu erhalten ist, zeigt in den VKA Tests hervorragende Verschleißwerte, mit denen es sich von den im Markt befindlichen Produkten wie TPPT (EC Nr.: 209-909-9) und Irgalube L63® (CAS Nr.: 71735-74-5) absetzt. Das erfindungsgemäße Produkt löst die eingangs beschriebenen Herausforderungen bezüglich des Bedarfs an leicht zugänglichen Hochleistungsadditiven mit extrem guten verschleißmindernden Eigenschaften bei gleichzeitig zu vernachlässigbarer Gefahrstoffeinordnung.

**Beispiel 1:**

Es wurden 5 g Dimethylphosphonat (1 Äquivalent) mit 57,24 g hydroxyl-terminiertem Polybutadien ($M_n$ = 2.100 g/mol; 0,6 Äquivalente) in einen mit Destillationsapparatur ausgestatteten Reaktor gegeben und die Anlage unter Rühren 5 min mit Argon gespült. Der Reaktor wurde unter Argon auf 150 °C geheizt und für 2h entstandenes Methanol abdestilliert. Nach 2 h Reaktionszeit wurde für 1 h Vakuum angelegt, sodass Methanol sowie nicht reagiertes Dimethylphosphonat vollständig entfernt wurde. Das Produkt fiel als leicht opake viskose Masse an.

Die Analyse des Produktes mittels $^{31}P$ NMR Spektroskopie zeigte keine Rückstände von Dimethylphosphonat (Figur 1), und es wurde ein mittleres n von etwa 5,1 ermittelt. Das $^1H$ NMR Spektrum zeigte quantitative Umsätze von Dimethylphosphonat zu dem polymeren Produkt (Figur 2).

**Beispiel 2:**

Es wurden 15g Dimethylphosphonat (1 Äquivalent) mit 171,74g hydroxyl-terminiertem Polybutadien ($M_n$ = 2.100 g/mol, 0,6 Äquivalente) in einen mit Destillationsapparatur ausgestatteten Reaktor gegeben und die Anlage unter Rühren 5 min mit Argon gespült. Der Reaktor wurde unter Argon auf 150°C geheizt und für 2 h entstandenes Methanol abdestilliert. Nach 2 h Reaktionszeit wurde für weitere 2 h Vakuum angelegt, so dass Methanol sowie nicht reagiertes Dimethylphosphonat vollständig entfernt wurde. Das Produkt fiel als leicht opake viskose Masse an.

Die Analyse des Produktes mittels $^{31}P$ NMR Spektroskopie zeigte keine Rückstände von Dimethylphosphonat (Figur 3), und es wurde ein mittleres n von etwa 8,3 ermittelt.

Das $^{1}H$ NMR Spektrum zeigte quantitative Umsätze von Dimethylphosphonat zu dem polymeren Produkt (Figur 4).

In analoger Weise werden funktionalisierte Derivate des OH - terminiertem Polybutadiens mit beschriebener Technologie zu den entsprechenden Poly(polybutadienphosphonaten) umgesetzt. So entstehen z.B. aus hydriertem bzw. epoxidiertem Polybutadien die analogen Phosphonate.

## Patentansprüche

1. Poly(polybutadienphosphonat) der Struktur I

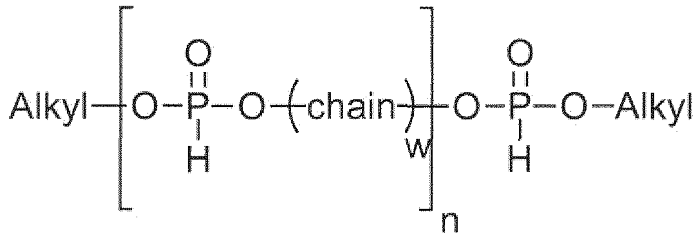

(I)

mit chain = $C_4H_6$, $C_4H_8$ oder $C_4H_6O$, w = 5-100 sowie n = 4-500, wobei wenn chain = $C_4H_6$ handelt es sich dabei um lineare und verzweigte Anteile von Butylen, wenn chain = $C_4H_8$ oder $C_4H_6O$ handelt es sich dabei um die entsprechenden hydrierten bzw. epoxidierten Funktionen.

2. Verfahren zur Herstellung eines Poly(polybutadienphosphonats) der Formel (1) gemäß Anspruch 1 umfassend die Schritte

   - Umsetzen eines hydroxyl-terminierten Polybutadiens, eines hydrierten hydroxyl-terminierten Polybutadiens oder eines epoxidierten hydroxyl-terminierten Polybutadiens mit einem kurzkettigen Dialkylphosphonate unter Erwärmung und
   - die optionale Entfernung des nicht umgesetzten kurzkettigen Dialkylphosphonates unter reduziertem Druck.

3. Verfahren nach Anspruch 2, wobei das hydroxyl-terminierte Polybutadien, das hydrierte hydroxyl-terminierte Polybutadien bzw. das epoxidierte hydroxyl-terminierte Polybutadien

   - eine mittlere Molekularmasse, $M_n$, im Bereich von 500 - 10.000 g/mol, bevorzugt bei 2.000 bis 3.000 g/mol, besonders bevorzugt bei 2.100 g/mol und/oder
   - eine relative Anzahl von Hydroxyl-Funktionen, Fn(OH), im Bereich von 1,6 bis 4,0, bevorzugt im Bereich von 1,6 bis 2,4, ganz besonders bevorzugt im Bereich von 1,9 bis 2,0

   aufweist.

4. Verfahren nach Anspruch 3, wobei das hydroxyl-terminierte Polybutadien, das hydrierte hydroxyl-terminierte Polybutadien bzw. das epoxidierte hydroxyl-terminierte Polybutadien eine relative Anzahl endständiger Hydroxyl-Funktionen, Fn(OH), von 1,9 bis 2,0 aufweist und in einer Stoffmenge (relativ zur Stoffmenge des verwendeten Dialkylphosphonats) von 0,4 bis 1, bevorzugt von 0,5 bis 0,7, ganz besonders bevorzugt von 0,6, eingesetzt wird; im Fall einer davon abweichenden relativen Anzahl endständiger Hydroxyl-Funktionen, Fn(OH), kann die Stoffmenge des hydroxyl-terminierten Polybutadiens, des hydrierten hydroxyl-terminierten Polybutadien bzw. des epoxidierten

hydroxyl-terminierten Polybutadiens relativ zur Stoffmenge des verwendeten Dialkylphosphonats entsprechend angepasst werden.

5. Verwendung des Poly(polybutadienphosphonats) nach Anspruch 1 als Schmiermittel oder Schmiermittelzusatz.

6. Verwendung des Poly(polybutadienphosphonats) gemäß Anspruch 5, wobei das Poly(polybutadienphosphonat) als Verschleißschutzadditiv fungiert und optional gleichzeitig Eigenschaften eines und optional gleichzeitig Eigenschaften eines *extrem pressure-Additivs* aufweist.

7. Verwendung eines Poly(polybutadienphosphonats) nach Anspruch 1 als Antioxidationsmittel,

8. Verwendung nach einem der Ansprüche 5-7 in Niederdruckanwendungen.

9. Verwendung nach einem der Ansprüche 5-7 in Hochdruckanwendungen.

10. Ölbasierte Zusammensetzung umfassend das Poly(polybutadienphosphonat) nach Anspruch 1.

11. Verwendung der Zusammensetzung gemäß Anspruch 10 als Schmiermittel, Hydraulikflüssigkeit, Motoröl, Schmierfett, Kühlschmierstoff, Schleifflüssigkeit, Metallverarbeitungsflüssigkeit oder Flammschutzmittel.

## Claims

1. Poly(polybutadiene phosphonate) of structure I

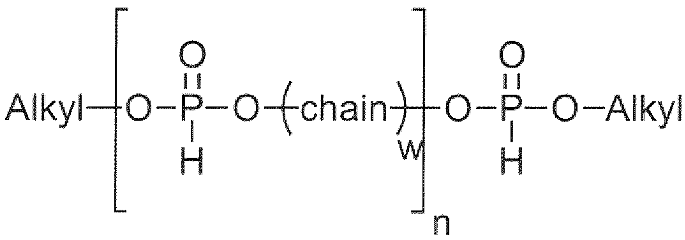

(I)

with chain = $C_4 H_6$, $C_4 H_8$ or $C_4 H_6 O$, w = 5-100 and n = 4-500, wherein when chain = $C_4 H_6$ these are linear and branched portions of butylene, when chain = $C_4 H_8$ or $C_4 H_6 O$, these are the corresponding hydrogenated or epoxidised functions.

2. A process for the preparation of a poly(polybutadiene phosphonate) of formula (I) according to claim 1, comprising the steps

- reacting a hydroxyl-terminated polybutadiene, a hydrogenated hydroxyl-terminated polybutadiene or an epoxidised hydroxyl-terminated polybutadiene with a short-chain dialkylphosphonate under warming and
- the optional removal of the unreacted short-chain dialkylphosphonate under reduced pressure.

3. Method according to claim 2, wherein the hydroxyl-terminated polybutadiene, the hydrogenated hydroxyl-terminated polybutadiene or the epoxidised hydroxyl-terminated polybutadiene

- has a mean molecular weight, $M_n$, in the range of 500-10.000 g/mol, preferably 2.000 to 3.000 g/mol, particularly preferably 2.100 g/mol, and/or
- a relative number of hydroxyl functions, Fn(OH), in the range from 1.6 to 4.0, preferably in the range from 1.6 to 2.4, most preferably in the range from 1.9 to 2.0.

4. Method according to claim 3, wherein the hydroxyl-terminated polybutadiene, the hydrogenated hydroxyl-terminated polybutadiene or the epoxidised hydroxyl-terminated polybutadiene has a relative number of terminal hydroxyl functions, Fn(OH) of 1.9 to 2.0 and is used in a quantity (relative to the quantity of the dialkyl phosphonate used) of 0.4 to 1, preferably 0.5 to 0.7, most preferably 0.6; in the case of a different relative number of terminal hydroxyl functions,

Fn(OH), the amount of the hydroxyl-terminated polybutadiene, the hydrogenated hydroxyl-terminated polybutadiene or the epoxidised hydroxyl-terminated polybutadiene relative to the amount of the dialkyl phosphonate used can be adjusted accordingly.

**5.** Use of the poly(polybutadiene phosphonate) according to claim 1 as a lubricant or lubricant additive.

**6.** Use of the poly(polybutadiene phosphonate) according to claim 5, wherein the poly(polybutadiene phosphonate) acts as a wear protection additive and optionally simultaneously exhibits properties of an *extreme pressure* additive.

**7.** Use of a poly(polybutadiene phosphonate) according to claim 1 as an antioxidant.

**8.** Use according to any of claims 5-7 in low-pressure applications.

**9.** Use according to any of claims 5-7 in high-pressure applications.

**10.** Oil-based composition comprising the poly(polybutadiene phosphonate) according to claim 1.

**11.** Use of the composition according to claim 10 as a lubricant, hydraulic fluid, motor oil, grease, cooling lubricant, grinding fluid, metalworking fluid or flame retardant.

## Revendications

**1.** Poly(phosphonate de polybutadiène) de structure I

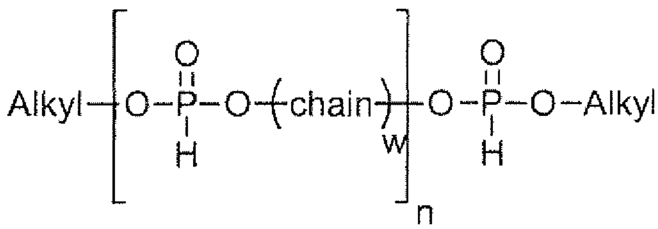

(I)

avec chain = $C_4H_6$, $C_4H_8$ ou $C_4H_6O$, w = 5 à 100 et n = 4 à 500, dans lequel lorsque chain = $C_4H_6$ il s'agit alors de portions linéaires et ramifiées de butylène, lorsque chain = $C_4H_8$ ou $C_4H_6O$ il s'agit alors des fonctions hydrogénées ou époxydées correspondantes.

**2.** Procédé destiné à fabriquer un poly(phosphonate de polybutadiène) de formule (I) selon la revendication 1, comprenant les étapes

- reacting a hydroxyl-terminated polybutadiene, a hydrogenated hydroxyl-terminated polybutadiene or an epoxidised hydroxyl-terminated polybutadiene with a short-chain dialkylphosphonate under warming and
- the optional removal of the unreacted short-chain dialkylphosphonate under reduced pressure.

**3.** Procédé selon la revendication 2, dans lequel le polybutadiène à terminaison hydroxyle, le polybutadiène à terminaison hydroxyle hydrogéné respectivement le polybutadiène à terminaison hydroxyle époxydé présente

- une masse moléculaire moyenne, Mn, dans la plage de 500 à 10 000 g/mol, de préférence de 2 000 à 3 000 g/mol, de manière particulièrement préférée de 2 100 g/mol et/ou
- un nombre relatif de fonctions hydroxyles, Fn(OH), dans la plage de 1,6 à 4,0, de préférence dans la plage de 1,6 à 2,4, de manière tout particulièrement préférée dans la plage de 1,9 à 2,0.

**4.** Procédé selon la revendication 3, dans lequel le polybutadiène à terminaison hydroxyle, le polybutadiène à terminaison hydroxyle hydrogéné respectivement le polybutadiène à terminaison hydroxyle époxydé présentent un nombre relatif de fonctions hydroxyles terminales, Fn(OH), de 1,9 à 2,0 et est utilisé dans une quantité de matière (par rapport à la quantité de matière du dialkylphosphonate utilisé) de 0,4 à 1, de préférence de 0,5 à 0,7, de manière

tout particulièrement préférée de 0,6 ; dans le cas d'un nombre relatif différent de fonctions hydroxyles terminales, Fn(OH), la quantité de matière du polybutadiène à terminaison hydroxyle, du polybutadiène à terminaison hydroxyle hydrogéné respectivement du polybutadiène à terminaison hydroxyle époxydé par rapport à la quantité de matière du dialkylphosphonate utilisé peut être adaptée de manière correspondante.

**5.** Utilisation du poly(phosphonate de polybutadiène) selon la revendication 1 en tant que lubrifiant ou additif de lubrifiant.

**6.** Utilisation du poly(phosphonate de polybutadiène) selon la revendication 5, dans lequel le poly(phosphonate de polybutadiène) fonctionne comme un additif anti-usure et présente en option en même temps des propriétés d'un additif *extrem pressure.*

**7.** Utilisation d'un poly(phosphonate de polybutadiène) selon la revendication 1 en tant qu'agent antioxydant,

**8.** Utilisation selon l'une des revendications 5 à 7 dans des applications à basse pression.

**9.** Utilisation selon l'une des revendications 5 à 7 dans des applications à haute pression.

**10.** Composition à base d'huile comprenant le poly(phosphonate de polybutadiène) selon la revendication 1.

**11.** Utilisation de la composition selon la revendication 10 en tant que lubrifiant, fluide hydraulique, huile moteur, graisse lubrifiante, lubrifiant de refroidissement, fluide de meulage, fluide de traitement des métaux ou retardateur de flamme.

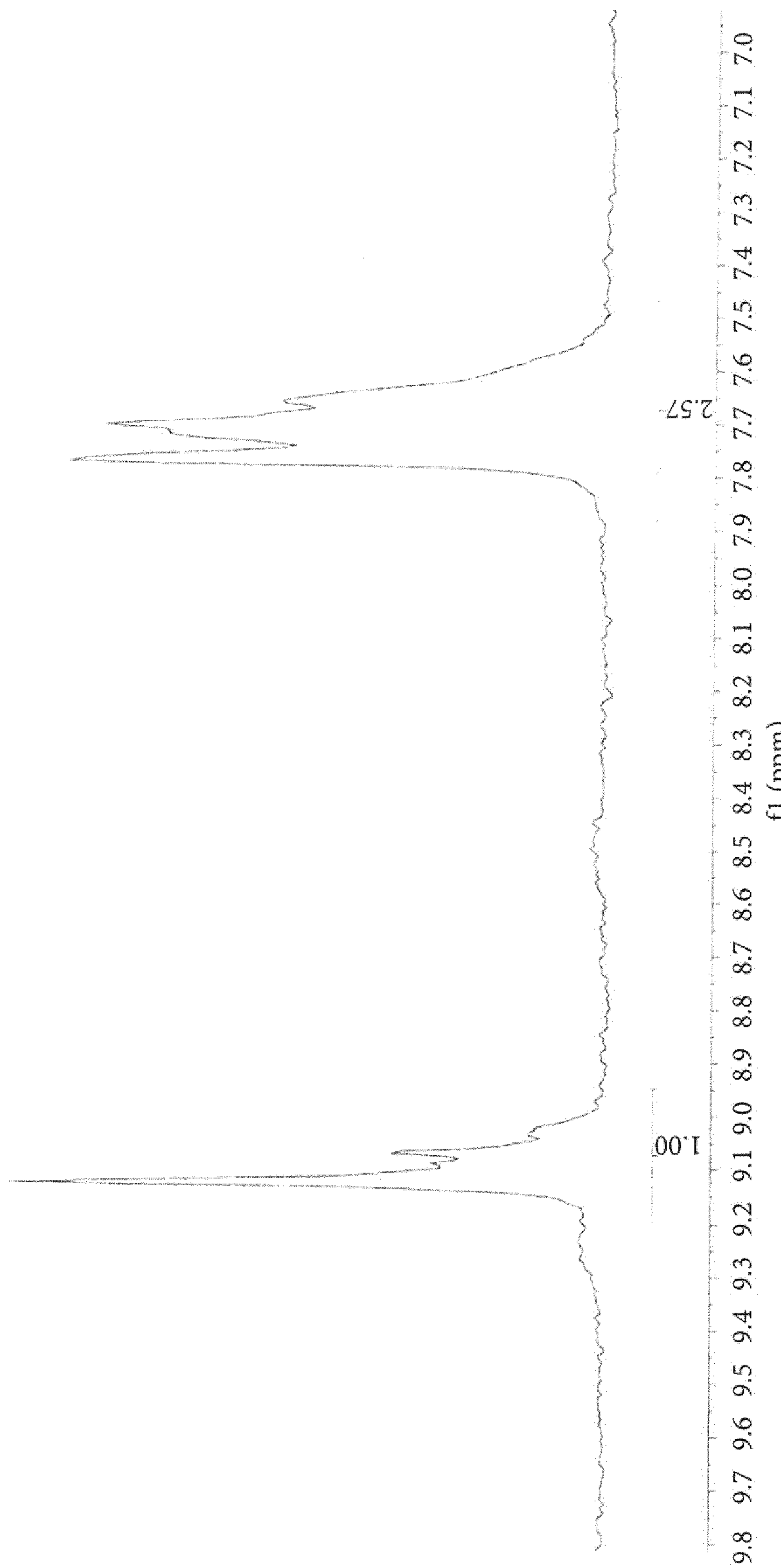


**Figur 1: $^{31}P$ NMR Spektrum eines beispielhaften Produktes mit einer Molekularmasse Mn von ca. 13.200 g/mol.**

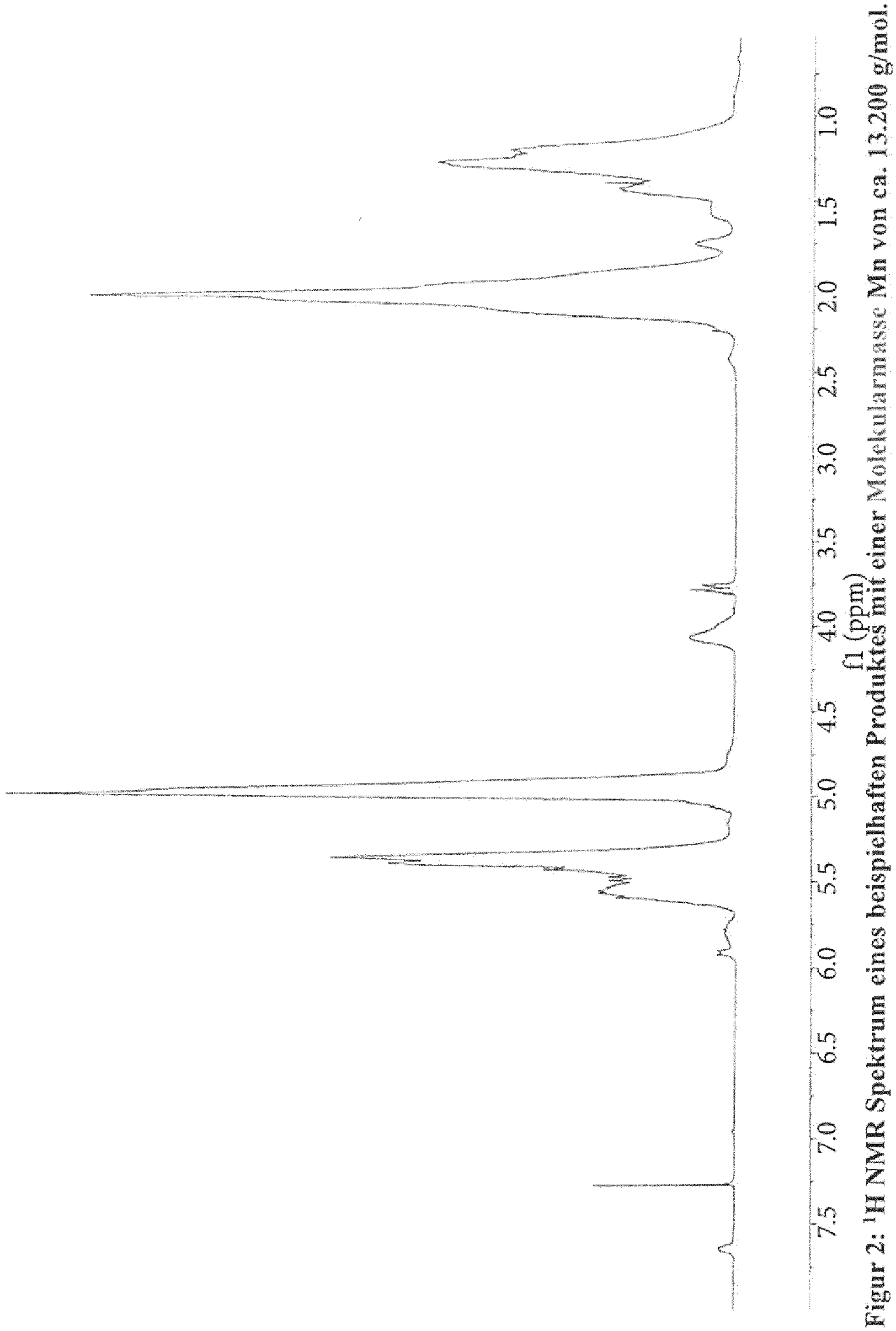


**Figur 2: $^{1}$H NMR Spektrum eines beispielhaften Produktes mit einer Molekularmasse Mn von ca. 13.200 g/mol.**

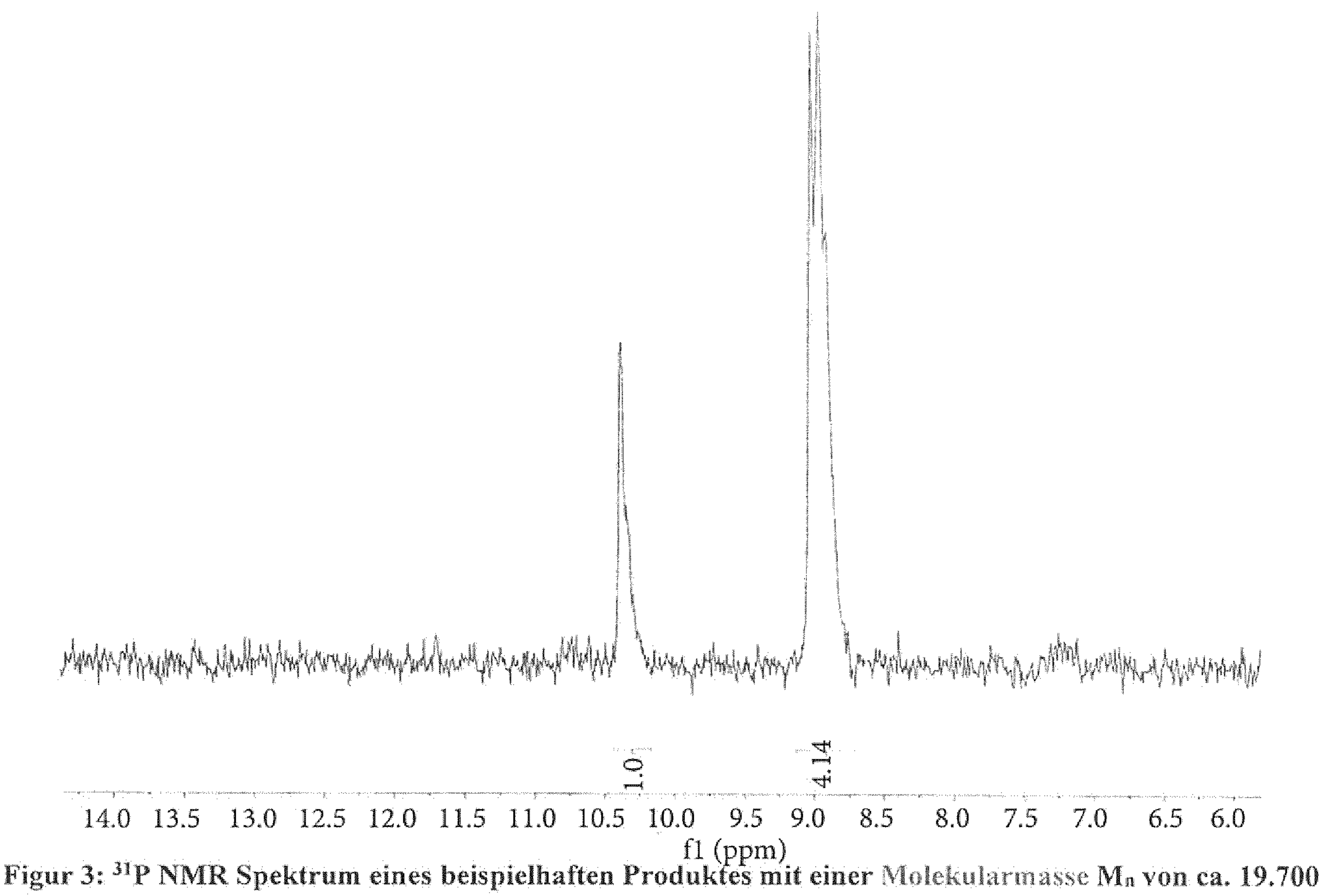


**Figur 3: $^{31}P$ NMR Spektrum eines beispielhaften Produktes mit einer Molekularmasse $M_n$ von ca. 19.700 g/mol.**

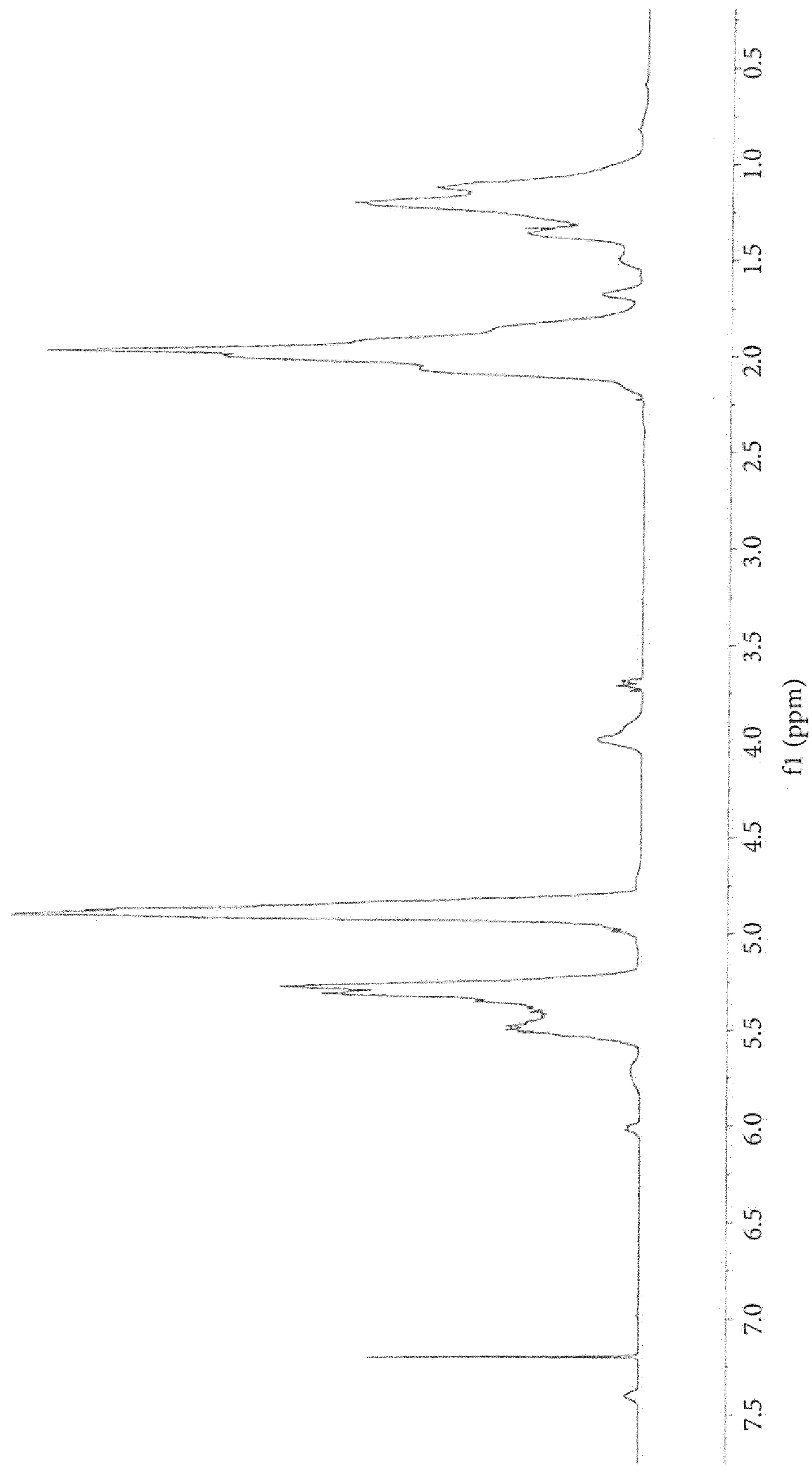


**Figur 4: $^1$H NMR Spektrum eines beispielhaften Produktes mit einer Molekularmasse $M_n$ von ca. 19.700 g/mol.**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20170002253 A
- WO 2019155739 A